# EUROPÄISCHE PATENTANMELDUNG

(11) **EP 1 143 312 A2**
(43) Veröffentlichungstag der Anmeldung: **10.10.2001**
(21) Anmeldenummer: 01810170.9
(22) Anmeldetag: 19.02.2001
(51) Int. Cl.: G04G 7/00

(54) **Zeitsynchronisation von Einheiten einer Anlage**

(30) Priorität: 17.03.2000 DE 10013348
(71) Anmelder: ABB RESEARCH LTD., 8050 Zürich (CH)
(72) Erfinder: Deck, Bernhard, 79809 Weilheim (DE); Züger, Hans Peter, 5212 Hausen (CH)
(74) Vertreter: ABB Patent Attorneys

(57) **Zusammenfassung**

In einem Verfahren zur Zeitsynchronisation von Einheiten (2) einer Anlage (A), welche eine Zeitbasiseinheit (1) aufweist, die über ein deterministisches Kommunikationsnetzwerk (3) mit den Einheiten (2) verbunden ist, sendet die Zeitbasiseinheit (1) in einem definierten Zeitabstand (t) Protokollpakete (P) über das deterministische Kommunikationsnetz (3) an die Einheiten (2). Diese empfangen die Protokollpakete (P) setzen den Zeitabstand (t) zwischen den empfangenen Protokollpaketen (P) zur mindestens annähernd identischen Taktung der Einheiten (2) ein. Dadurch wird durch einfache Mittel eine erhöhte Genauigkeit in der Synchronisation von Anlagenteilen erreicht.

## Beschreibung

### Technisches Gebiet

Die Erfindung betrifft ein Verfahren zur Zeitsynchronisation von Einheiten einer Anlage gemäss Oberbegriff des Patentanspruches 1 sowie einer Anlage mit einer Zeitsynchronisationseinrichtung gemäss Oberbegriff des Patentanspruches 8. Die Erfindung bezieht sich insbesondere auf Schaltanlagen und Automatisierungsanlagen im Bereich der Hoch- und Mittelspannung.

### Stand der Technik

Derartige Schaltanlagen und Automatisierungsanlagen weisen mehrere Einheiten oder Unterstationen auf, welche meistens voneinander unabhängig und oft räumlich voneinander getrennt sind. Um die Funktionsfähigkeit der Anlage zu gewährleisten, müssen diese Einheiten basierend auf derselben Zeitbasis arbeiten, also gleiche Taktlängen aufweisen, und im allgemeinen zudem miteinander synchronisiert sein. Diese Synchronisation erfolgt gemäss dem Stand der Technik dadurch, dass über ein Kommunikationsnetz Datenpakete von einer ersten Einheit zu einer zweiten Einheit und wieder zurück übertragen wird und Laufzeiten dieser gesendeten und retournierten Datenpakete ermittelt werden. Anhand einer ermittelten Laufzeit wird dann in der ersten Einheit eine Systemzeit berechnet. Die ermittelten Laufzeiten und somit die Systemzeiten variieren jedoch, so dass die Einheiten mit unterschiedlichen Zeitbasen arbeiten. Gründe hierfür sind Kommunikationsnetze mit sich ändernder Übermittlungsrate und unterschiedliche Reaktionszeiten in der Rücksendung des Datenpaketes. Dadurch sind nicht nur die einzelnen Enheiten nicht in der gewünschten Genauigkeit miteinander synchronisiert, ihre interne Taktung kann auch in der Taktlänge voneinander abweichen.

Zur Vermeidung derartiger Synchronisationsfehler wird für den Bereich von Differentialschutzsystemen für ein Hochspannungsnetz in der unveröffentlichten deutschen Patentanmeldung Nr. 199 33 684.9 vorgeschlagen, GPS (Global Positioning Systems) zu verwenden. Jede Schutzeinheit weist einen GPS-Empfänger auf, um direkt von einem GPS-Satelliten eine GPS-Uhrzeit zu erhalten. Zwar weisen alle Schutzeinheiten dieselbe Taktung auf und eine genaue Synchronisation ist ermöglicht. Nachteilig ist jedoch, dass jede Schutzeinheit mit einem GPS-Empfänger ausgerüstet werden muss, was die Anlage verteuert. Zudem ist es aus Platzgründen oft nicht möglich, jede Schutzeinheit mit einem derartigen Empfänger zu versehen.

### Darstellung der Erfindung

Es ist deshalb Aufgabe der Erfindung, ein Verfahren und eine Anlage der eingangs genannten Art zu schaffen, welche die obengenannten Nachteile beheben.

Diese Aufgabe löst ein Verfahren zur Zeitsynchronisation von Einheiten einer Anlage gemäss Anspruch 1 sowie eine Anlage mit einer Zeitsynchronisationseinrichtung gemäss Anspruch 8.

Erfindungsgemäss verfügt die Anlage selber über eine Zeitbasiseinheit, welche über ein deterministisches Kommunikationsnetz mit Einheiten der Anlage verbunden ist. Die Zeitbasis sendet Protokollpakete in einem definierten Zeitabstand an die Einheiten, welche diesen Zeitabstand zur Taktung einsetzen.

Durch Übermittlung einer lokalen Uhrzeit durch das Protokollpaket lassen sich die Einheiten auf einen gemeinsamen Zeitwert synchronisieren. Diese Übermittlung erfolgt vorzugsweise in sehr kurzen Zeitabständen, insbesondere in einem Zeitabstand von 1 Sekunde, wobei die Zeitabstände zwischen den einzelnen gesandten Protokollpaketen vorzugsweise um maximal 1 µs variieren.

Vorzugsweise verwendet die Zeitbasiseinheit als Uhrzeit und Taktung eine GPS-Zeit, welche sie mittels eines GPS-Empfängers erhält.

Weitere vorteilhafte Ausführungsformen gehen aus den abhängigen Patentansprüchen hervor.

### Kurze Beschreibung der Zeichnungen

Im folgenden wird der Erfindungsgegenstand anhand eines bevorzugten Ausführungsbeispiels, welches in der beiliegenden Zeichnung dargestellt ist, näher erläutert. Es zeigt:

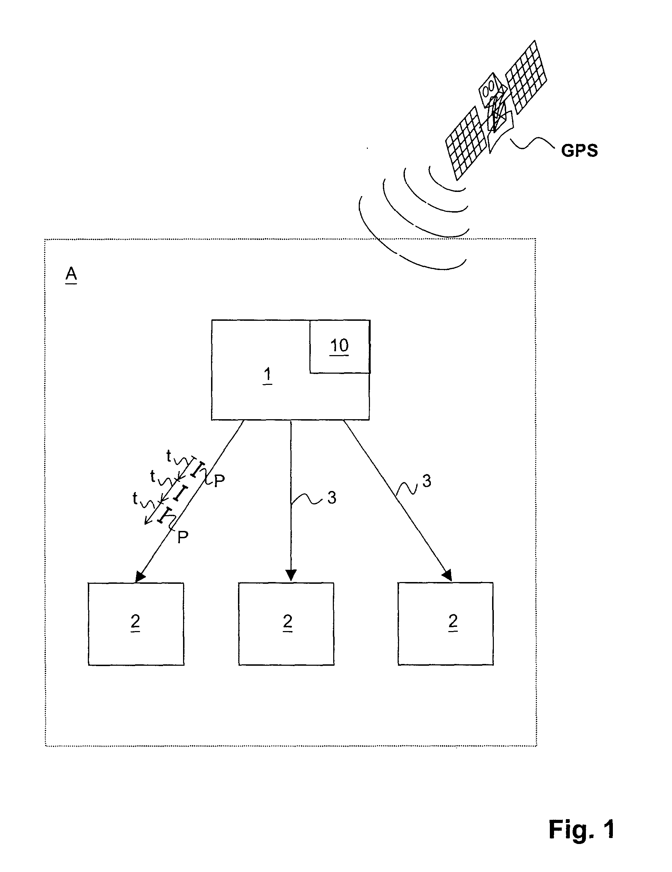

- Figur 1: eine schematische Darstellung einer erfindungsgemässen Anlage mit einer Synchronisationseinrichtung.

### Wege zur Ausführung der Erfindung

In Figur 1 ist schematisch eine Anlage A gemäss der Erfindung dargestellt. Vorzugsweise handelt es sich dabei um eine Schalt- oder Automatisierungsanlage im Bereich der Hoch- und Mittelspannung. Die Anlage A weist eine Zeitbasiseinheit 1 und mehrere Einheiten 2 auf, welche über ein Kommunikationsnetz 3 jeweils mit der Zeitbasiseinheit 1 verbunden sind. Die Zeitbasiseinheit 1 weist Mittel zur Definition einer Zeitbasis auf. Diese Mittel können eine in der Zeitbasiseinheit 1 integrierte Uhr, ein Empfänger für ein Signal einer Funkuhr oder vorzugsweise ein GPS-Empfänger 10 sein. Dieser GPS-Empfänger 10 empfängt Signale von mehreen GPS-Satelliten Das Signal beinhaltet die Uhrzeit und wird als Universal Time (UT) übermittelt..

Das Kommunikationsnetz 3 ist ein deterministisches Kommunikationsnetz zur Übermittlung von Protokollpaketen P, wobei seine maximale Abweichung vom Sendetakt maximal im µs-Bereich liegt. Als derartiges Kommunikationsnetz 3 eignen sich insbesondere ein Feldbussystem, ein DOL (Dedicated Optical Link)-Netz oder auch ein drahtloses Netzwerk.

Die Zeitbasiseinheit 1 sendet über das Kommunikationsnetz 3 in einem definierten Zeitabstand t Protokollpakete P zu den einzelnen Einheiten 2. Die Protokollpakete beinhalten dabei Informationen über eine lokale Uhrzeit und vorzugsweise auch über das Datum. Üblicherweise werden IRIG-B Protokollpakete (IRIG=Interrange Instrumentation Group) verwendet.

Die Protokollpakete werden dabei in einem Zeitabstand gesendet, welcher um maximal 1 µs variiert. Der Zeitabstand selber beträgt 10^{-x} Sekunden, wobei x eine natürliche Zahl inklusive 0 ist. Vorzugsweise beträgt der Zeitabstand genau 1 Sekunde, das heisst, x=0. Das Protokollpaket selber weist vorzugsweise eine Dauer auf, welche kleiner als 10^{-x} Sekunden ist.

Die Einheiten weisen Mittel zum Empfang der Protokollpakete auf. Ferner verfügen sie über Mittel zur Taktung ihrer Einheit, so dass die Einheiten mindestens annähernd identisch getaktet sind. Die Genauigkeit der Taktung beträgt dabei einige ns.

Durch die Übermittlung von Protokollpaketen in definierten Zeitabständen ist es möglich, allen Einheiten einer Anlage auf derselben Zeitbasis arbeiten zu lassen. Alle Einheiten arbeiten mit derselben Zeiteinheit, welche nicht einem je nach Einheit variierendem Drift unterworfen ist. Durch Übermittlung der Zeitinformation im Protokollpaket ist es zudem möglich, allen Einheiten denselben Zeitwert zukommen zu lassen, sofern die Einheiten über identische Empfänger verfügen. Ferner lassen sich bei Verwendung von GPS-Empfängern in den Zeitbasiseinheiten mehrere Anlagen miteinander synchronisieren, da alle über das GPS mit derselben Zeitbasis arbeiten. Da alle Anlagen zeitgleich zueinander arbeiten, lassen sich sporadisch auftretende Ereignisse in Anlagenteilen miteinander zeitlich genau vergleichen. Ein weiterer Vorteil ist, dass die Möglichkeit gegeben ist, den Abtastzeitpunkt von analogen Signalen in verschiedenen Anlagen zum genau gleichen Zeitpunkt zu wählen.

## Patentansprüche

1. Verfahren zur Zeitsynchronisation von Einheiten (2) einer Anlage (1), welche eine Zeitbasiseinheit (1) aufweist, die über ein deterministisches Kommunikationsnetzwerk (3) mit den Einheiten (2) verbunden ist, wobei die Zeitbasiseinheit (1) in einem definierten Zeitabstand (t) Protokollpakete (P) über das deterministische Kommunikationsnetz (3) an die Einheiten (2) sendet, welche die Protokollpakete (2) empfangen und den Zeitabstand (t) zwischen den empfangenen Protokollpaketen (P) zur mindestens annähernd identischen Taktung der Einheiten (2) einsetzen.

2. Verfahren nach Anspruch 1, **dadurch gekennzeichnet, dass** die Protokollpakete in einem Zeitabstand gesendet werden, welcher um maximal 1 µs variiert.

3. Verfahren nach Anspruch 1, **dadurch gekennzeichnet, dass** die Protokollpakete in einem Zeitabstand von 10^{-x} Sekunden gesendet werden, wobei x eine natürliche Zahl inklusive 0 ist.

4. Verfahren nach Anspruch 3, **dadurch gekennzeichnet, dass** x=0 ist.

5. Verfahren nach Anspruch 3, **dadurch gekennzeichnet, dass** Protokolle mit einer Länge von kleiner als 10^{-x} Sekunden gesendet werden.

6. Verfahren nach Anspruch 1, **dadurch gekennzeichnet, dass** die Zeitbasis den definierten Zeitabstand anhand einer GPS-Uhrzeit bestimmt.

7. Verfahren nach Anspruch 1, **dadurch gekennzeichnet, dass** die Protokollpakete Informationen über eine lokale Uhrzeit beinhalten.

8. Anlage (A) mit mehreren Einheiten (2) und einer Zeitsynchronisationsvorrichtung, **dadurch gekennzeichnet, dass** die Zeitsynchronisationsvorrichtung eine Zeitbasiseinheit (1) aufweist, **dass** jede der Einheiten (2) mit der Zeitbasiseinheit (1) über ein deterministisches Kommunikationsnetzwerk (3) verbunden ist, **dass** die Zeitbasiseinheit (1) Mittel zum Senden von Protokollpaketen (P) in einem gleichbleibenden Zeitabstand (t) über das Kommunikationsnetzwerk (3) aufweist, **dass** jede Einheiten (2) Mittel zum Empfang dieser Protokollpakete (P) und Mittel zur mindestens annähernd identischen Taktung ihrer Einheit (2) basierend auf dem gleichbleibenden Zeitabstand (t) aufweist.

9. Anlage nach Anspruch 8, **dadurch gekennzeichnet, dass** die Zeitbasis einen GPS-Empfänger aufweist.

10. Anlage nach Anspruch 8, **dadurch gekennzeichnet, dass** das Kommunikationsnetzwerk ein Feldbussystem, ein DOL-Netz oder ein drahtloses Netzwerk ist.

11. Anlage nach Anspruch 8, **dadurch gekennzeichnet, dass** sie eine Schaltanlage oder eine Automatisierungsanlage im Bereich der Hoch- oder Mittelspannung ist.
